# EUROPEAN PATENT SPECIFICATION

(11) **EP 1 231 098 B1**
(45) Date of publication and mention of the grant of the patent: **10.04.2013**
(21) Application number: 02002537.5
(22) Date of filing: 04.02.2002
(51) Int. Cl.: B60M 1/28

(54) **Device to detect the tension for stretching machines and stretching machine adopting said device**
Spannungsdetektoreinrichtung für Seilziehmaschinen damit ausgerüstete Ziehmaschine
Dispositif de détection de tension pour machines de pose de lignes et machine de pose équipée d'un tel dispositif

(30) Priority: 09.02.2001 IT UD010024
(43) Date of publication of application: 14.08.2002
(73) Proprietor: Tesmec SpA, 20123 Milano (IT)
(72) Inventor: Bravi, Alfredo, 24040 Bonate Sopra (BG) (IT)
(74) Representative: Petraz, Gilberto Luigi

(56) References cited:
- DE-C- 4 334 063
- US-A- 3 241 817
- US-A- 4 852 856

## Description

### FIELD OF THE INVENTION

The invention concerns a device to detect the tension for stretching machines, and also the stretching machine adopting said tension detection device.

The invention is applied in the production of machines and equipment for laying and stretching cables, electric conductors or optical fibres on respective aerial or underground supports, in order to achieve high, medium or low tension electric lines, signal-carrying lines or aerial contact and carrying lines for railways and tramways.

Document EP 861.752 discloses a device having the gradually increased diameter, so that it is possible to features of the preamble of the main claim 1.

### BACKGROUND OF THE INVENTION

Stretching machines and equipment to achieve aerial or underground lines normally comprise means to feed the conductors, cables, etc., singly or in bundles, which have to be laid, normally called retractors/rewinders, a braking assembly, normally called "brake", and a traction assembly normally called "winch".

The function of the braking assembly is to determine the unwinding tension of the conductors from the feed means and to keep the desired tension during the laying of the conductors, cables, optical fibres, etc., while the winch determines the speed of translation.

When employed to make electric lines, the usual stretching procedure provides that the feed means, for example the reel-bearing stands or similar, are arranged fixed at one end of the section from which stretching begins, behind the braking assembly, while the winch, that is, the traction station, is positioned at the other end of the section.

To lay the conductors, pilot cables are usually used of a achieve a drawing action sufficient to unwind the conductors from the relative reels. To lay the electric lines for railways or tramways, a (drawn or self-propelled) wagon is normally employed, on which both the feed means (reels) and also the braking/traction assembly used to stretch the conductors are mounted.

The "winch" function is performed by the locomotive which draws or pushes the wagon thus equipped.

In applications of conventional-type stretching machines, one problem which those businessmen operating in the field greatly complain of is how to detect the precise value of tension of the conductors, and how to possibly control and regulate it. In fact, current stretching machines do not comprise means to detect with precision the tension of the conductors during laying, nor to possibly intervene automatically on the regulation members in the event that there are discrepancies with respect to the desired values and/or values set by the specific relative legislation.

At present, the tension of the conductors is set at the start of the operation and is detected indirectly, for example by reading a manometer, continuously during the operation itself; any fine-tuning of the tension is made after laying, using jaw-type tensioners, jacks or other suitable type. This subsequent tensioning entails an increase in time, labor costs, possible risks to the safety of the operator and other disadvantages.

There is therefore in this field a great need for the introduction and development of equipment suitable to perform the stretching of conductors, cables and optical fibres, ensuring a precise and accurate measurement of the tension, and avoiding the need for auxiliary, subsequent adjustment interventions.

The present Applicant has devised and embodied this invention to meet this requirement and to obtain further advantages as shown hereafter.

### SUMMARY OF THE INVENTION

The invention is set forth and characterized in the respective main claims, while the dependent claims describe other characteristics of the main embodiment.

The purpose of the invention is to achieve a device to detect the tension, applicable to machines for stretching cables, conductors and optical fibres, both aerial and underground, so as to permit a continuous control and a possible feedback intervention, automatic or manual, to ensure the desired conditions of tension are maintained.

The tension detection device according to the invention is applied substantially to every type of laying machine, such as for example winches, brakes and winch-brakes, assembled on their own frames or on movable means, on which cables, conductors and optical fibres are wound to carry out the stretching.

As we know, laying machines consist of at least a grooved drum (capstan), normally two, with its own supporting shaft and equipped on the circumference with one or more throats inside which the cables, conductors or optical fibres to be stretched are wound.

The drums are associated with motion transmission means which make them rotate at the programmed speed of unwinding, impressing or absorbing the set torque, in order to ensure the correct tensioning of the cables, conductors or optical fibres to be stretched.

According to the invention, on the supporting shaft of the outlet drum an idle wheel is coaxially mounted, on which the cable, conductor or optical fibre to be stretched winds before leaving the machine, and at least a tension detector element is positioned between the inner circumference of said idle wheel and the outer circumference of said shaft. In a preferential solution, said tension detector element consists of at least a load cell. According to a variant, there are at least two load cells arranged opposite each other with respect to said shaft.

During the winding/unwinding of the cables/conductors/optical fibres, said idle wheel is subject to slight displacements on the plane on which it lies, the entity of which displacements is directly correlated to the tension of the wire winding on its outer circumference.

In other words, the cable/conductor/optical fibre winding on the idle wheel determines thereon a force of thrust which, since the wheel is mounted idle on the shaft of the drum, causes it to be displaced with respect to the shaft. This displacement causes an increase or reduction in the pressure exerted on the load cell(s) located between the inner circumference of the idle wheel and the outer circumference of the shaft.

In one embodiment of the invention, these load cells can be functionally connected to the unit which controls the machine, which is thus able to act in feedback on the power plant, either hydraulic or electric, in response to the signals which arrive from the load cells, if the tension detected by means of the detection device as described above does not correspond to the programmed values.

### BRIEF DESCRIPTION OF THE DRAWINGS

These and other characteristics of the invention will be apparent from the description of the preferential form of embodiment of the invention, given as a non-restrictive example with reference to the attached drawings wherein:
Fig. 1 is a schematic view of a stretching machine for aerial lines for railways or tramways, on which the tension detection device according to the invention can be adopted;
Fig. 2 is a side view of a form of embodiment of the tension detection device according to the invention;
Fig. 3 is a front partial section of the tension detection device shown in Fig. 2.

### DETAILED DESCRIPTION OF PREFERENTIAL EMBODIMENT

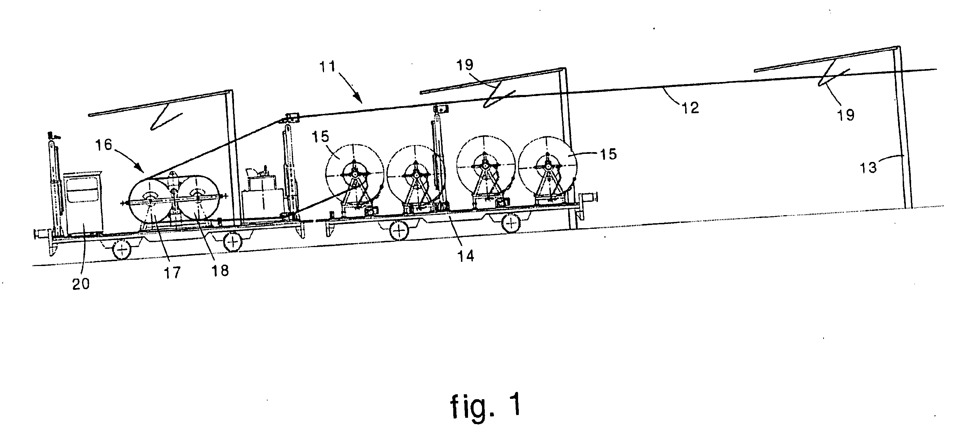

Fig. 1 shows a stretching machine, denoted in its entirety by the reference number 11, suitable to lay aerial lines for railways or tramways. To be more exact, the stretching machine 11 is suitable to stretch conductors 12 to arrange them on suitably distanced supports 13 equipped with respective supporting couplers 19.

The machine 11 consists of a drawn (or self-propelled) means 14 suitable to support, in this case, four reels 15 to feed four conductors 12, and a braking device 16 consisting of a brake with two driven drums or capstans, respectively 17 and 18, around which the conductors 12 are wound before they are arranged on the couplers 19.

On the drawn means 14 a programmable control station 20 is also arranged, comprising assemblies able to synchronize the speed of advance of the means 14 with the speed of rotation of the driven drums 17, 18, and to determine and maintain the desired values of tension set for the conductors 12.

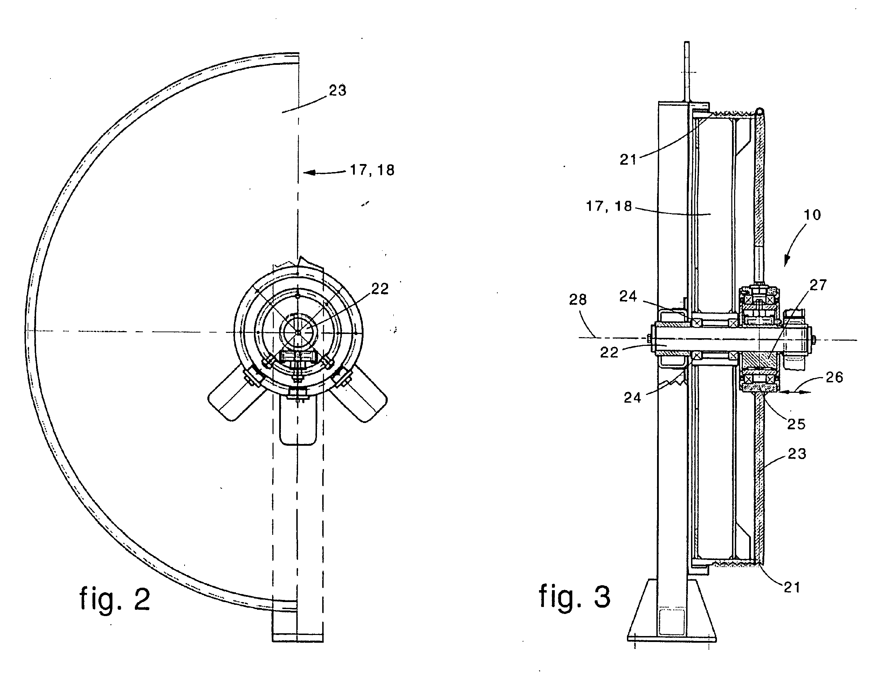

Each drum 17, 18 (Fig. 3) has circumferential throats 21 inside which at least a respective conductor 12 is able to wind, from the inside to the outside of the relative drum 17 and 18, until it emerges from one side and above the drum, as can be seen in Fig. 1, to be progressively arranged on the couplers 19.

Each drum is mounted by means of bearings 24 on a supporting shaft 22 which is associated in conventional fashion with a drive means (not shown here), normally of the hydraulic or electric type, by means of suitable motion transmission means; the functioning of the motor means is subordinate to the command of the control station 20.

The motion transmission means are of a conventional type and can consist of a pinion which engages on the respective toothed crowns of both the drums, of two pinions which each engage on its toothed crown, or of two gear reduction units associated with respective motor means; in a further solution, the motors can be keyed directly onto the respective shafts 22. The motion transmission means, which are not shown since they are not relevant for the invention, are associated with an electric or hydraulic power transmission plant 24 controlled by the station 20.

The tension detection device 10 according to the invention (Fig. 3) comprises an idle wheel 23 axially mounted on the shaft 22 of the relative drum 17, 18, and equipped on the circumference with a throat 21 inside which the conductor 12 winds before being discharged from the drum 17, 18. This device 10 also comprises an element sensitive to mechanical pressure, such as a load cell 25, positioned between the inner circumference of the idle wheel 23 and the element 27 which couples it to the shaft 22.

During the winding of the conductor 12 on the relative throat 21, the idle wheel 23 is subject to a displacement on the plane on which it lies, in the direction indicated by the reference number 26. The entity of this displacement depends on the tension of the conductor 12 subject to traction by the rotation of the drums 17, 18, and hence on the force which the conductor 12 exerts on the idle wheel 23 as it winds.

The displacement of the idle wheel 23, in one direction or the other with respect to the median axis 28 of the shaft 22, determines a greater or lesser pressure on the load cell 25, which detects this pressure signal and sends it to the control station 20. Since this pressure signal can be univocally ascribed to the tension of the conductor, the control station 20 is able to compare the tension detected by the load cell 25 with a pre-set value, and to command the drive motor of said drums 17, 18 to increase or decrease the braking/traction action exerted by the braking/traction device 16. In this way it is possible, during the stretching of the conductors 12, to correct any possible discrepancies in the tension with respect to a programmed and pre-set value.

It is obvious that, instead of one load cell 25, the device 10 can comprise two, three or more load cells 25, advantageously arranged symmetrically around the circumference of the shaft 22; the presence of more load cells 25 allows to construct machines suitable to lay more conductors 12 in a manner congruous with the number of load cells provided; it also allows to regulate the tension in both directions, that is, when laying can be carried out in the opposite direction to that of the means 14.

It is also obvious that, instead of one load cell 25, any other identical element sensitive to mechanical pressure, or to another size which can be directly, indirectly or proportionally linked to the tension of the conductor 12, could be installed in the device 10.

For example, according to the system of construction used, values of the flexion or torsion of the shaft could be detected, or the compression of the joint beams of the drums, which values could be read, for example, by means of strainmeters or instruments with a similar function.

The detection device 10 as described heretofore can be applied not only to the case shown, that is, in an application to a means 14 for railway lines, but also to fixed braking/traction devices 16, or mounted on trailer frames which can be drawn by tractors, lorries, off-road vehicles or the like, used to stretch high, medium or low tension electric lines, either aerial or underground. More generally, the device 10 can be applied to any stretching system provided with drums 17, 18 on which conductors 12, cables or optical fibres are wound.

Modifications and variants can be made to the present invention which are obvious to the person of skill in the art and which will all come within the field of the invention as defined in the attached claims.

## Claims

1. Device to detect the tension for stretching machines (11) comprising means (15) to feed at least a conductor (12), cable or optical fibre to be stretched, at least a tension dedection element (25) and at least a braking/traction device (16), said braking device (16) comprising at least a drum (17, 18) on which said conductor (12) is able to wind, said drum (17, 18) comprising at least a respective supporting shaft (22), **characterized in that** at least an idle wheel (23) is coaxially assembled on said shaft (22) onto which said conductor (12) to be stretched winds before leaving the device (16), and **in that** the at least one tension detection element (25) being positioned between the inner circumference of said idle wheel (23) and the outer circumference of said shaft (22).

2. Device as in claim 1, **characterized in that** said tension detection element consists of at least a load cell (25).

3. Device as in claim 1 or 2, **characterized in that** it comprises at least two load cells (25) arranged in a position opposite each other with respect to said shaft (22).

4. Device as in claim 1, **characterized in that** said tension detection element consists of at least a strainmeter able to detect the flexion of said shaft (22).

5. Device as in claim 1, **characterized in that**, during the winding/unwinding of the conductors (12) to be stretched, said idle wheel (23) is able to be displaced on the plane on which it lies for an entity directly correlated to the tension of the conductor (12) which is winding on its outer circumference, and to exert, due to said displacement, a pressure on said tension detection element (25) which is a direct function of the tension of the conductor (12) which is winding thereon.

6. Device as in claim 1, wherein the stretching machine (11) comprises at least a control station (20) wherein there is at least an assembly able to control the drive of the motor means associated with said shaft (22), **characterized in that** said tension detection device (10) is functionally associated with said control station (20) to supply thereto the signals relating to the value of tension of said conductor (12) which is winding on said idle wheel (23).

7. Stretching machine (11) comprising means (15) to feed at least a conductor (12) to be stretched, at least a braking/traction device (16) and at least a control station (20), said braking/traction device (16) comprising at least a drum (17, 18) on which said conductor (12) is able to wind, said drum (17, 18) comprising at least a shaft (22) associated with motor means whose drive is commanded by said control station (20), and comprising at least a tension detection device (10) as in any preceding claims 1 to 6, functionally associated with said drum (17, 18), said tension detection device (10) being configured to continuously detect the tension of the conductor (12) being wound around said braking/traction device (16) and to send the signals relating to the value of tension detected to said control station (20).

8. Machine as in claim 7, **characterized in that** said braking/traction device (16) consists of a brake, winch or winch-brake.

9. Machine as in claim 7 or 8, **characterized in that** said tension detection device (10) comprises at least an idle wheel (23) on which the conductor (12) to be stretched winds before emerging from the relative drum (17, 18), said idle wheel (23) being mounted coaxially on said shaft (22) and being associated with at least one tension detection element (25) positioned between the inner circumference of said idle wheel (23) and the outer circumference of said shaft (22).

10. Machine as in claim 9, **characterized in that** said tension detection element comprises at least a load cell (25).

11. Machine as in claim 7, **characterized in that** it comprises at least a drawn or self-propelled means (14) suitable to support and move said means (15) to feed the conductors (12), said braking device (16) and said control station (20).

12. Machine as in claim 7, **characterized in that** it comprises a fixed frame suitable to support said means (15) to feed the conductors (12), said braking device (16) and said control station (20).

13. Machine as in claim 7, **characterized in that** said means (15) to feed the conductors (12) and said at least one braking/traction device (16) associated with said tension detection device (10) are fixed to the ground or mounted on trailer frames which can be drawn by a means of transport.

## Patentansprüche

1. Vorrichtung zum Detektieren der Spannung für Ziehmaschinen (11), umfassend Mittel (15) zum Zuführen von zumindest einem zu streckenden Leiter (12), Kabel oder optischer Faser, zumindest ein Spannungsdetektierelement (25) und zumindest eine Brems-/Traktionsvorrichtung (16), wobei die Bremsvorrichtung (16) zumindest eine Trommel (17, 18) umfasst, um welche der Leiter (12) sich wickeln kann, wobei die Trommel (17, 18) zumindest eine entsprechende stützende Welle (22) umfasst, **dadurch gekennzeichnet, dass** zumindest ein Zwischenrad (23) koaxial auf die Welle (22) montiert ist, auf welches sich der zu streckende Leiter (12) wickelt, bevor er die Vorrichtung (16) verlässt und dadurch, dass das zumindest eine Spannungsdetektierelement (25) zwischen dem inneren Umfang des Zwischenrads (23) und dem äußeren Umfang der Welle (22) positioniert ist.

2. Vorrichtung gemäß Anspruch 1, **dadurch gekennzeichnet, dass** das Spannungsdetektierelement aus zumindest einer Kraftmesszelle (25) besteht.

3. Vorrichtung gemäß Anspruch 1, **dadurch gekennzeichnet, dass** die Vorrichtung zumindest zwei Kraftmesszellen (25) umfasst, welche in einer einander gegenüberliegenden Position in Bezug auf die Welle (22) angeordnet sind.

4. Vorrichtung gemäß Anspruch 1, **dadurch gekennzeichnet, dass** das Spannungsdetektierelement aus zumindest einem Dehnungsmesser besteht, welcher dazu in der Lage ist, die Biegung der Welle (22) zu detektieren.

5. Vorrichtung gemäß Anspruch 1, **dadurch gekennzeichnet, dass** während des Wickelns/Abwickelns des zu streckenden Leiters (12) das Zwischenrad (23) dazu in der Lage ist, auf der Ebene, auf welcher es liegt, um ein Maß verschoben zu werden, welches direkt mit der Spannung des Leiters (12) korreliert, welcher auf dem äußeren Umfang des Zwischenrads aufgewickelt ist, und, aufgrund dieser Verschiebung, einen Druck auf das Spannungsdetektierelement (25) auszuüben, der eine direkte Funktion der Spannung des Leiters (12) ist, welcher um das Zwischenrad gewickelt ist.

6. Vorrichtung gemäß Anspruch 1, wobei die Ziehmaschine (11) zumindest eine Kontrollstation (20) umfasst, wobei es zumindest eine Baueinheit gibt, welche dazu in der Lage ist, den Antrieb der Motormittel, welche mit der Welle (22) verbunden sind, zu steuern, **dadurch gekennzeichnet, dass** die Spannungsdetektiervorrichtung (10) funktional mit der Kontrollstation (20) verbunden ist, um dafür die Signale bereitzustellen, welche sich auf die Spannungswerte des Leiters (12) beziehen, welcher um das Zwischenrad (23) gewickelt ist.

7. Ziehmaschine (11), umfassend Mittel (15) zum Zuführen von zumindest einem zu streckenden Leiter (12), zumindest einer Brems-/Traktionsvorrichtung (16) und zumindest eine Kontrollstation (20), wobei die Brems-/Traktionsvorrichtung (16) zumindest eine Trommel (17, 18) umfasst, um welcher der Leiter (12) gewickelt werden kann, wobei die Trommel (17, 18) zumindest eine Welle (22) umfasst, welche mit Motormitteln verbunden ist, deren Antrieb von der Kontrollstation (20) steuerbar ist, und umfassend zumindest eine Spannungsdetektiervorrichtung (10) gemäß einem der vorhergehenden Ansprüche 1 bis 6, welche funktional mit der Trommel (17, 18) verbunden ist, wobei die Spannungsdetektiervorrichtung (10) dazu konfiguriert ist, kontinuierlich die Spannung des Leiters (12) zu detektieren, welcher um die Brems-/Traktionsvorrichtung (16) gewickelt ist und die auf den Wert der detektierten Spannung bezogenen Signale an die Kontrollstation (20) zu senden.

8. Maschine gemäß Anspruch 7, **dadurch gekennzeichnet, dass** die Brems-/Traktionsvorrichtung (16) aus einer Bremse, Winde oder Bremswinde besteht.

9. Maschine gemäß Anspruch 7 oder 8, **dadurch gekennzeichnet, dass** die Spannungsdetektiervorrichtung (10) zumindest ein Zwischenrad (23) umfasst, um welches der zu streckende Leiter (12) gewickelt ist, bevor er von der jeweiligen Trommel (17, 18) hervorkommt, wobei das Zwischenrad (23) koaxial auf der Welle (22) montiert ist und zumindest einem Spannungsdetektierelement (25) zugeordnet ist, welches zwischen dem inneren Umfang des Zwischenrads (23) und dem äußeren Umfang der Welle (22) positioniert ist.

10. Maschine gemäß Anspruch 9, **dadurch gekennzeichnet, dass** das Spannungsdetektierelement zumindest eine Kraftmesszelle (25) umfasst.

11. Maschine gemäß Anspruch 7, **dadurch gekennzeichnet, dass** die Maschine zumindest ein gezogenes oder selbst angetriebenes Mittel (14) umfasst, welches dazu geeignet ist, das Mittel (15) zum Zuführen der Leiter (12), die Bremsvorrichtung (16) und die Kontrollstation (20) zu unterstützen und zu bewegen.

12. Maschine gemäß Anspruch 7, **dadurch gekennzeichnet, dass** die Maschine einen festen Rahmen umfasst, welcher dazu geeignet ist, das Mittel (15) zum Zuführen der Leiter (12), die Bremsvorrichtung (16) und die Kontrollstation (20) zu unterstützen.

13. Maschine gemäß Anspruch 7, **dadurch gekennzeichnet, dass** das Mittel (15) zum Zuführen der Leiter (12) und die zumindest eine Brems-/Traktionsvorrichtung (16), welche der Spannungsdetektiervorrichtung (10) zugeordnet ist, auf dem Boden fixiert oder auf Anhängerrahmen, welche durch ein Transportmittel gezogen werden können, montiert sind.

## Revendications

1. Dispositif de détection de tension pour machines de pose de lignes (11) comprenant des moyens (15) permettant d'amener au moins un conducteur (12), câble ou fibre optique à poser, et au moins un élément de détection de tension (25), un dispositif de freinage/traction (16), ledit dispositif de freinage (16) comprenant au moins un tambour (17, 18) sur lequel peut s'enrouler ledit conducteur (12), ledit tambour (17, 18) comprenant au moins un arbre de support (22) respectif, **caractérisé en ce qu'**au moins une roue libre (23) est montée coaxialement sur ledit arbre (22) sur lequel ledit conducteur (12) à poser s'enroule avant de quitter le dispositif (16), et **en ce que** le au moins un élément de détection de tension (25) est placé entre la circonférence intérieure de ladite roue libre (23) et la circonférence extérieure dudit arbre (22).

2. Dispositif selon la revendication 1, **caractérisé en ce que** ledit élément de détection de tension se compose d'au moins une cellule de chargement (25).

3. Dispositif selon la revendication 1, **caractérisé en ce qu'**il comprend au moins deux cellules de chargement (25) installées à l'opposé l'une de l'autre par rapport audit arbre (22).

4. Dispositif selon la revendication 1, **caractérisé en ce que** ledit élément de détection de tension se compose d'au moins un extensomètre capable de détecter la flexion dudit arbre (22).

5. Dispositif selon la revendication 1, **caractérisé en ce que**, lors de l'enroulement/déroulement des conducteurs (12) à poser, ladite roue libre (23) peut se déplacer sur son plan d'appui sous l'effet d'une entité directement corrélée à la tension du conducteur (12) en cours d'enroulement sur sa circonférence extérieure, et exercer sur ledit élément de détection de tension (25), par suite dudit déplacement, une pression qui est directement fonction de la tension du conducteur (12) en cours d'enroulement sur elle.

6. Dispositif selon la revendication 1, dans lequel la machine de pose de lignes (11) comprend au moins un poste de contrôle (20) dans lequel se trouve au moins une structure capable de contrôler l'entraînement de l'organe moteur associé audit arbre (22), **caractérisé en ce que** ledit dispositif de détection de tension (10) est fonctionnellement associé audit poste de contrôle (20) afin de lui fournir les signaux correspondant à la valeur de tension dudit conducteur (12) en cours d'enroulement sur ladite roue libre (23).

7. Machine de pose de lignes (11) comprenant des moyens (15) d'amener au moins un conducteur (12) à poser, au moins un dispositif de freinage/traction (16) et au moins un poste de contrôle (20), ledit dispositif de freinage/traction (16) comprenant au moins un tambour (17, 18) sur lequel peut s'enrouler ledit conducteur (12), ledit tambour (17, 18) comprenant au moins un arbre (22) associé à un organe moteur dont l'entraînement est commandé par ledit poste de contrôle (20), et comprenant au moins un dispositif de détection de tension (10) selon l'une quelconque des revendications 1 à 6, fonctionnellement associé audit tambour (17, 18), ledit dispositif de détection de tension (10) étant conçu pour détecter en continu la tension du conducteur (12) en cours d'enroulement autour dudit dispositif de freinage/traction (16) et pour envoyer audit poste de contrôle (20) les signaux correspondant à la valeur de tension détectée.

8. Machine selon la revendication 7, **caractérisée en ce que** ledit dispositif de freinage/traction (16) se compose d'un frein, d'un treuil ou d'un treuil freiné.

9. Machine selon la revendication 7 ou 8, **caractérisée en ce que** ledit dispositif de détection de tension (10) comprend au moins une roue libre (23) sur laquelle s'enroule le conducteur (12) à poser avant d'émerger du tambour associé (17, 18), ladite roue libre (23) est montée coaxialement sur ledit arbre (22) et étant associée à au moins un élément de détection de tension (25) placé entre la circonférence intérieure de ladite roue libre (23) et la circonférence extérieure dudit arbre (22).

10. Machine selon la revendication 9, **caractérisée en ce que** ledit élément de détection de tension comprend au moins une cellule de chargement (25).

11. Machine selon la revendication 7, **caractérisée en ce qu'**elle comprend au moins un moyen tracté ou autotracté (14) approprié à supporter et déplacer lesdits moyens (15) d'amenée des conducteurs (12), ledit dispositif de freinage (16) et ledit poste de contrôle (20).

12. Machine selon la revendication 7, **caractérisée en ce qu'**elle comprend un châssis fixe approprié à supporter lesdits moyens (15) d'amenée des conducteurs (12), ledit dispositif de freinage (16) et ledit poste de contrôle (20).

13. Machine selon la revendication 7, **caractérisée en ce que** lesdits moyens (15) d'amenée des conducteurs (12) et ledit au moins un dispositif de freinage/traction (16) associé audit dispositif de détection de tension (10) sont fixés au sol ou montés sur des châssis de remorque pouvant être tractés par un moyen de transport.
